# EUROPÄISCHE PATENTSCHRIFT

(11) **EP 0 471 805 B1**
(45) Veröffentlichungstag und Bekanntmachung des Hinweises auf die Patenterteilung: **02.08.1995**
(21) Anmeldenummer: 91904257.2
(22) Anmeldetag: 01.03.1991
(51) Int. Cl.: C07F 9/655

(54) **VERFAHREN ZUR HERSTELLUNG VON DERIVATEN DER ASCORBINSÄURE**
METHOD FOR PREPARING DERIVATIVES OF ASCORBIC ACID
METHODE DE PREPARATION DE DERIVES D'ACIDE ASCORBIQUE

(30) Priorität: 07.03.1990 CH 731/90
(43) Veröffentlichungstag der Anmeldung: 26.02.1992
(73) Patentinhaber: F. HOFFMANN-LA ROCHE AG, 4002 Basel (CH)
(72) Erfinder: PAULING, Horst, D-4103 Bottmingen (CH); WEHRLI, Christof, CH-4108 Witterswil (CH)
(74) Vertreter: Urech, Peter, Dr.
(86) Internationale Anmeldenummer: CH9100049
(87) Internationale Veröffentlichungsnummer: WO9113895

(56) Entgegenhaltungen:
- DE-A- 2 719 303
- FR-A- 1 489 249
- FR-A- 1 536 706

## Beschreibung

Die Erfindung betrifft ein Verfahren zur Herstellung von Ascorbylphosphaten, und zwar von Phosphaten der Formel 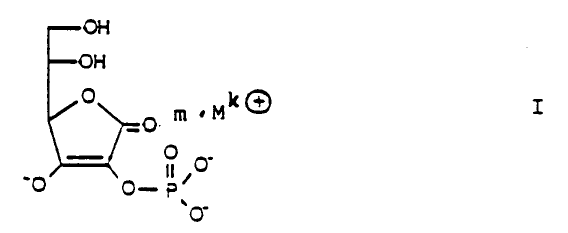
worin M^{k+} ein Kation, k⁺ die Wertigkeit und m die Aequivalente bezeichnet, wobei das Produkt aus k.m = 3 ist,
durch Phosphorylierung von Ascorbinsäure.
k ist 1 bis 3, insbesondere 1 oder 2.

In der Deutschen Offenlegungsschrift 2.719.303 ist ein Verfahren zur Herstellung von Phosphorsäureestern der Ascorbinsäure beschrieben, gemäss welchem eine Ascorbinsäure in einem verträglichen wässrigen Lösungsmittel in Gegenwart eines tertiären Amins mit einem Phosphoroxyhalogenid bei einem pH-Wert des Gemisches von mindestens 8 und einer Temperatur von -10° bis +10°C umgesetzt wird.

Beim Verfahren der Erfindung wird als Phosphorylierungsreagens vorgelegtes Natrium- oder Kaliumdichlorophosphat verwendet, die Zugabe der Ascorbinsäure zu diesem Phosphorylierungsreagens in wässriger Lösung, insbesondere bei pH-Werten zwischen ca. 11,0 und ca. 13,0, in Anwesenheit eines wasserlöslichen Trialkylamins als Katalysator und bei Temperaturen zwischen ca. +10°C und ca. -8°C, insbesondere bei Temperaturen unter 0°C bewerkstelligt, und das als Natrium- oder Kaliumsalz anfallende I gegebenenfalls umgesalzt und/oder gegebenenfalls über ein Aminsalz gereinigt.

Die Herstellung des Phosphorylierungsreagens geschieht vorzugsweise in situ, und zwar aus POCl₃ und wässriger NaOH oder KOH. Das Verhältnis von POCl₃:Base ist zweckmässigerweise ca. 1:1,5 bis ca. 1:2,5, vorzugsweise ca. 1:2.

Man stellt dieses Reagens in einem pH-Bereich von ca. 4-11 her, wobei die bevorzugte Arbeitsweise Arbeiten in neutralem Milieu beinhaltet.

Man arbeitet zweckmässigerweise bei Temperaturen von ca. -8°C bis ca. +10°C. wobei Temperaturen unterhalb 0°C bevorzugt sind, was auch für die unten beschriebene Abtrennung der Alkalisalze gilt.

Zum so hergestellten Phosphorylierungsreagens - in Lösung bzw. gegebenenfalls auch in Suspension - erfolgt nun die Zugabe der Ascorbinsäure. Diese Zugabe erfolgt zweckmässigerweise bei pH-Werten zwischen ca. 11 bis ca. 13, und bei Temperaturen wie oben aufgeführt.

Die Zugabe der Ascorbinsäure zum Phosphorylierungsreagens führt zu der angestrebten Selektivität: Die Temperatur kann nämlich so auf viel einfachere Weise tief gehalten werden: Ein Teil der bei der Hydrolyse frei werdenden Wärmemenge ist ja eben schon abgeführt.

Ein zweckmässiges Verhältnis von Ascorbinsäure:Phosphorylierungsmittel ist dasjenige von ca. 1:1 bis ca. 1:1,5, worin der bevorzugte Bereich um ca. 1:1,35 liegt.

Die Herstellung der Salze I erfolgt unter Zugabe eines Katalysators, und zwar eines wasserlöslichen tert.Amins.

Dieses tert.Amin ist zweckmässigerweise acyclisch, monocyclisch oder bicyclisch.

Beispiele bevorzugter wasserlöslicher Amine sind Amine mit folgenden Gruppierungen:
a) 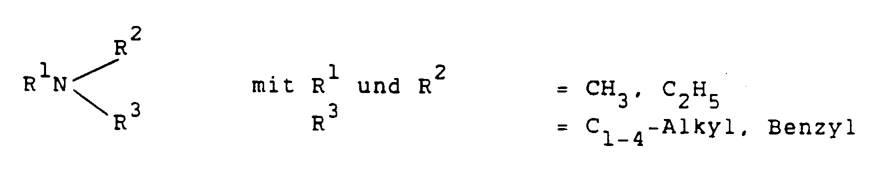
b) 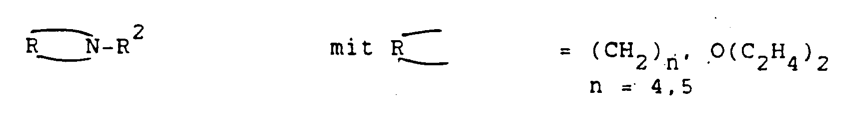
c) DABCO (Diazabicyclooctan)
Bevorzugt ist Trimethylamin.

Das zweckmässige Verhältnis von Ascorbinsäure:Amin ist ca. 1:0,2 bis ca. 1:1, wobei der bevorzugte Bereich ca. 1:0,5 ist.

Die Zugabe der Ascorbinsäure zum präformierten Phosphorylierungsreagens erfolgt also in stark alkalischem Bereich.

Es erfolgt spontane Kristallisation des Alkaliphosphates, wobei das Na-Salz dem K-Salz gegenüber bevorzugt ist.

Nach dessen Abtrennung kann aus dem Filtrat, das das Trinatrium- oder Trikaliumsalz I enthält, mittels einer Lösung eines wasserlöslichen Metall-Salzes umgesalzen werden, wobei so das jeweils unlöslichste Salz I ausgefällt werden kann.

Im Vordergrund des Interesses sind hier Ca²⁺ und Mg²⁺. Vorzugsweise wird ein Chlorid verwendet, doch kommt auch das Anion einer anderen Mineralsäure, beispielsweise das Nitrat in Frage.

Die bevorzugten Konzentrationen liegen im Bereich von wenigen Mol/Liter, z.B. ca. 1-2 Mol/l.

Die weitere Reinigung der Phosphate I (M = Na,K) geschieht vorzugsweise unter Zuhilfenahme von sogenannten "Kristallisationsbasen", die mit Säuren, im vorliegenden Fall mit der "sauren"-Form von I, Salze bilden.

Als Kristallisationsbasen geeignet sind insbesondere bi- und tricyclische Aminoverbindungen, beispielsweise 1- oder 2-Amino-adamantan, (+)-Dehydroabietylamin, etc.

Besonders geeignet sind Aminoverbindungen, die das Camphan- (Bornan) oder Pinangerüst besitzen, wie z.B.
3-endo-Aminoborneol-methyläther,
[1S]-3-Pinanamin,
(-)-cis-Myrtanylamin,
wobei speziell geeignet sind:
(+)-3-(Aminomethyl)-pinan und
(-)-3-(Aminomethyl)-pinan.

Aus dieser Zusammenstellung ist ersichtlich, dass die untere Grenze der C-Atome im Cyclus vorzugsweise 9 ist.

Diejenigen Phosphate I, die als Kation ein den obigen Aminoverbindungen entsprechendes Ammoniumion aufweisen, kristallisieren besonders leicht aus, beispielsweise aus einem Gemisch niedriger Alkohole, z.B. Methanol/Wasser.

Diese Salze dienen, wie oben gesagt, insbesondere zur Herstellung reiner Ascorbylphosphate.

Das schwer lösliche Ca-Salz I dient insbesondere zur Vitaminisierung von Fischfutter, das leichtlösliche Natrium-Salz und das in Wasser gutlösliche CaH-Salz dient vorzugsweise zur Vitaminisierung von Säugetierfutter.

Die Salze I finden generell Anwendung zur Vitaminisierung für den food- und feed-Bereich, wo sie - je nach Löslichkeit - in an sich bekannter Weise eingesetzt werden können.

### Beispiel 1

Unter Schutzgasatmosphäre werden 55 ml 20% NaCl vorgelegt. Dazu gibt man bei -8°C und bei pH 7 (±3) innert 20 Minuten 12,4 ml POCl₃, 31 ml 28% NaOH und 100 g Eis. Es wird darauf geachtet, dass der pH-Wert des Gemisches immer ca. 7 beträgt und die Temperatur nicht über -8°C steigt. Es folgt nun Zugabe von 17,6 g Ascorbinsäure (in 33 ml 3N NaOH), 60 g Eis und 10 ml 45% Trimethylamin. Der pH-Wert wird durch Zugabe von 50 ml 28% NaOH bei 12 gehalten. Man rührt bis zur Beendigung der Zugabe der NaOH bei 5°C. Man nutscht das auskristallisierte Na₃PO₄ bei -8°C und pH 13 ab. Das Filtrat wird im Vakuum auf 300 ml eingeengt und durch Zugabe von konz. HCl auf pH 10 gestellt.

Diese Lösung mit dem Trinatriumsalz von I wird innert einer Stunde zu 180 ml 1 molarer CaCl₂-Lösung getropft. Nach 2 Tagen ist die Fällung des Calciumsalzes beendet. Das auskristallisierte Material wird abgenutscht, mit Wasser gewaschen und im Vakuum getrocknet. Ausbeute 31 g Calcium--L-ascorbat-2-phosphat·3H₂O (Gehalt 85%).

### Beispiel 2

300 ml rohe Natrium-L-ascorbat-2-phosphat-Lösung (pH 10) werden mit 36,6 g Magnesiumchlorid·6H₂O vereinigt und es werden darauf bei Zimmertemperatur innert 4 Stunden 440 ml Methanol zugetropft. Nach 2 Tagen ist die Fällung des Magnesium-Natrium-L-ascorbat-2-phosphats·5H₂O beendet. Man nutscht ab und wäscht mit 50% wässrigem Methanol, dann mit 50 ml wasserfreiem Methanol nach. Ausbeute 32 g; Gehalt 84%.

### Beispiel 3

39 g Magnesium,Natrium-L-ascorbat-2-phosphat-pentahydrat (Gehalt ca. 84%) werden in 200 ml Wasser gelöst und mit stark saurem Ionenaustauscher (z.B. DOWEX 50W X8) behandelt. Die saure Lösung (freie Säure von I) wird anschliessend mit einer Lösung von 50 g (-)-3-Aminomethylpinan (= 0,3 Mol) in 200 ml Methanol bei einem pH-Wert von ca. 7 bis 9 versetzt. Die Fällung wird unter Erwärmen gelöst. Das Produkt kristallisiert nach dem Animpfen beim Abkühlen aus. Nach dem Abnutschen und Trocknen erhält man 60,6 g Tris-(-)-3-aminomethylpinan-L-ascorbat-2-phosphat-dihydrat.

Zu den 60,6 g Tris-(-)-3-aminomethylpinan-L-ascorbat--2-phosphat-dihydrat werden 229 ml 1N Natronlauge und 200 ml Diäthyläther gegeben und unter Rühren aufgelöst. Die wässrige Phase wird abgetrennt und mit Diäthyläther nachgewaschen. Die wässrige Phase wird eingeengt. Dabei kristallisiert das Produkt aus. Man erhält 26,3 g Natrium-L-ascorbat--2-phosphat-dihydrat = 87% d.Th. mit einem Gehalt von ca. 99%.

### Beispiel 4

10 g Calzium L-ascorbat-2-phosphat-trihydrat werden in 55 ml 1N Salzsäure gelöst. Die Lösung wird unter Vakuum auf 30 g eingeengt. Dazu werden langsam, bei 0-10°C und pH 2-2,4 50 ml Methanol innert ca. 3 Stunden zugetropft, wobei das Calziumhydrogen-L-ascorbat-2-phosphat auskristallisiert. Der pH-Wert der Suspension wird durch simultane Zugabe von 4N Natronlauge bei pH 2-2,4 gehalten. Nach 24 Stunden Stehen lassen bei 0°C wird das Produkt genutscht, mit 30 ml Methanol nachgewaschen und 5 Stunden bei 50°C im Vakuum getrocknet. Es fallen 6,46 g Calziumhydrogen-L-ascorbat--2-phosphathydrat an.

## Patentansprüche

1. Verfahren zur Herstellung von Verbindungen der Formel 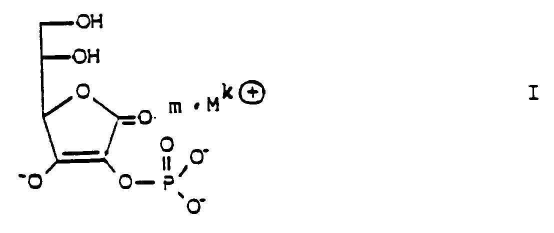 worin M^{k+} ein Kation, k⁺ die Wertigkeit und m die Aequivalente bezeichnet, wobei das Produkt aus k.m = 3 ist,
durch Phosphorylierung von Ascorbinsäure, wobei man als Phosphorylierungsreagens vorgelegtes Natrium oder Kaliumdichlorophosphat verwendet, die Zugabe der Ascorbinsäure zu diesem Phosphorylierungsreagens in wässriger Lösung, insbesondere bei pH-Werten zwischen ca. 11,0 und ca. 13,0 in Anwesenheit eines wasserlöslichen Trialkylamins als Katalysator und bei Temperaturen zwischen ca. +10°C und ca. -8°C, insbesondere bei Temperaturen unter 0°C bewerkstelligt und das als Natrium- oder Kaliumsalz anfallende I gegebenenfalls umsalzt und/oder gegebenenfalls über ein Aminsalz reinigt.

2. Verfahren nach Anspruch 1, dadurch gekennzeichnet, dass man das Phosphorylierungsreagens in situ herstellt.

3. Verfahren nach Anspruch 1 oder 2, dadurch gekennzeichnet, dass man ein acyclisches, mono- oder bicyclisches tert.Amin als Katalysator verwendet.

4. Verfahren nach einem der Ansprüche 1-3, dadurch gekennzeichnet, dass man unter Zuhilfenahme einer Ca- oder Magnesiumsalzlösung umfällt.

## Claims

1. A process for the manufacture of compounds of the formula 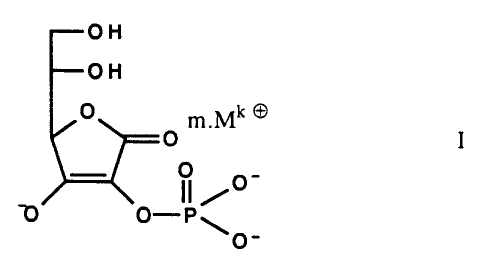 wherein M^{k+} denotes a cation, k⁺ denotes the valency and m denotes the equivalents, with the proviso that the product from k.m = 3,
by phosphorylating ascorbic acid, with sodium or potassium dichlorophosphate being used as the phosphorylating reagent, the addition of ascorbic acid to this phosphorylating agent being carried out in aqueous solution, especially at pH values between about 11.0 and about 13.0, in the presence of a water-soluble trialkylamine as the catalyst and at temperatures between about +10°C and about -8°C, especially at temperatures below 0°C, and, if desired, the I which is obtained as the sodium or potassium salt being trans-salted and/or, if desired, purified via an amine salt.

2. A process according to claim 1, characterized in that the phosphorylating reagent is prepared in situ.

3. A process according to claim 1 or 2, characterized in that an acyclic, mono- or bicyclic tert. amine is used as the catalyst.

4. A process according to any one of claims 1-3, wherein reprecipitation is carried out with the aid of a Ca or magnesium salt solution.

## Revendications

1. Procédé pour préparer des composés de formule 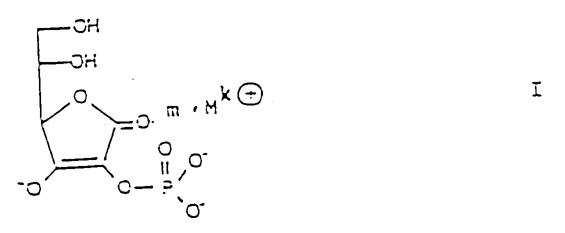 dans laquelle M^{k+} est un cation, k⁺ est la valence et m les équivalents, le produit k.m étant égal à 3,
par phosphorylation d'acide ascorbique, dans lequel on utilise comme réactif de phosphorylation du dichlorophosphate de sodium ou de potassium préalablement placé, on procède à l'addition de l'acide ascorbique à ce réactif de phosphorylation en solution aqueuse, en particulier à des pH compris entre environ 11,0 et environ 13,0, en présence d'une trialkylamine soluble dans l'eau servant de catalyseur et à des températures comprises entre environ +10 et environ -8°C, en particulier à des températures inférieures à 0°C, et on procède éventuellement à une transsalification du composé I, obtenu sous forme de son sel de sodium ou de potassium, et/ou éventuellement on le purifie par l'intermédiaire d'un sel d'amine.

2. Procédé selon la revendication 1, caractérisé en ce qu'on prépare in situ le réactif de phosphorylation.

3. Procédé selon la revendication 1 ou 2, caractérisé en ce qu'on utilise comme catalyseur une amine tertiaire acyclique, monocyclique ou bicyclique.

4. Procédé selon l'une des revendications 1 à 3, caractérisé en ce qu'on procède à une reprécipitation à l'aide d'une solution d'un sel de Ca ou de magnésium.
